# EUROPÄISCHE PATENTSCHRIFT

(11) **EP 4 281 331 B1**
(45) Veröffentlichungstag und Bekanntmachung des Hinweises auf die Patenterteilung: **29.05.2024**
(21) Anmeldenummer: 21819364.7
(22) Anmeldetag: 22.11.2021
(51) Int. Cl.: B60R 21/013, F17C 13/12

(54) **ENERGIESPEICHERANORDNUNG FÜR EIN KRAFTFAHRZEUG UND KRAFTFAHRZEUG MIT EINER SOLCHEN ENERGIESPEICHERANORDNUNG**
ENERGY STORAGE ARRANGEMENT FOR A MOTOR VEHICLE AND MOTOR VEHICLE COMPRISING SUCH AN ENERGY STORAGE ARRANGEMENT
AGENCEMENT DE STOCKAGE D?ÉNERGIE POUR UN VÉHICULE AUTOMOBILE ET VÉHICULE AUTOMOBILE COMPRENANT UN TEL AGENCEMENT DE STOCKAGE D?ÉNERGIE

(30) Priorität: 21.01.2021 DE 102021101203
(43) Veröffentlichungstag der Anmeldung: 29.11.2023
(73) Patentinhaber: Audi AG, 85045 Ingolstadt (DE)
(72) Erfinder: STOLL, Oliver, 69429 Waldbrunn (DE); RAUSCH, Julius, 74074 Heilbronn (DE)
(86) Internationale Anmeldenummer: PCT/EP2021/082410
(87) Internationale Veröffentlichungsnummer: WO 2022/156936

(56) Entgegenhaltungen:
- EP-A1- 2 557 615
- WO-A2-2011/088061
- DE-A1-102013 206 508

## Beschreibung

Die Erfindung betrifft eine Energiespeicheranordnung für ein Kraftfahrzeug mit einem geschlossenen Gehäuse und wenigstens einer in dem Gehäuse angeordneten Energiespeichereinrichtung zur Speicherung von Brennstoff oder elektrischer Energie, wie im Oberbegriff des Patentanspruchs 1 angegeben. Die Erfindung betrifft ferner ein Kraftfahrzeug mit einer solchen Energiespeicheranordnung.

Eine Energiespeichereinrichtung im Sinne der hier betreffenden Erfindung ist eine Einrichtung zur Bevorratung von Brennstoff oder zur Speicherung von elektrischer Energie für den Antrieb eines Kraftfahrzeugs. Bei einer Kollision des Kraftfahrzeugs, womit insbesondere ein Verkehrsunfall mit einem anderen Kraftfahrzeug oder einem Hindernis gemeint ist (hierzu gehört insbesondere auch die Kollision mit einem Bodenhindernis oder eine sonstige Krafteinwirkung von unten, wie bspw. Steinschlag oder dergleichen), kann es zu einer Beschädigung oder Vorbeschädigung der Energiespeichereinrichtung(en) kommen. Solche Beschädigungen oder Vorbeschädigungen werden häufig nicht bemerkt oder bleiben unentdeckt und können dann im Weiteren zu Folgeschäden führen.

Die DE 60 2004 011 526 T2 beschreibt einen Gasbehälter, der ein komprimiertes brennbares Gas enthält und mit einer Sicherheitsentlastungsvorrichtung versehen ist. Die Sicherheitsentlastungsvorrichtung umfasst einen druckbeaufschlagten Auslöseschlauch, der durch einen den Behälter umgebenden Gefahrenbereich verläuft. Ein durch Temperaturanstieg oder mechanische Beschädigung bewirkter Bruch dieses Auslöseschlauchs führt zu einem Druckabfall, wodurch eine Notentleerung des unter Druck stehenden brennbaren Gases aus dem Gasbehälter ausgelöst wird.

Die nächstliegende EP 2 557 615 A1 beschreibt eine Batterievorrichtung für ein Automobil mit einem Gehäuse, in dem mehrere Batteriezellen angeordnet sind. Im Gehäuse ist auch ein Drucksensor angeordnet, der mit einer außerhalb des Gehäuses angeordneten Steuerungseinheit verbunden ist. Wenn die Batterievorrichtung durch eine Kollision des Automobils verformt wird, steigt der Druck im Inneren an. Dieser Anstieg des Drucks kann von der Steuerungseinheit mithilfe des Drucksensors erfasst und daraufhin eine Schutzmaßnahme eingeleitet werden.

Die erfindungsgemäße Energiespeicheranordnung des Patentanspruchs 1 ermöglicht bei einem vergleichsweise einfachen und kostengünstigen Aufbau ein zuverlässiges Erkennen einer Kollision oder dergleichen, die zu einer Beschädigung oder Vorbeschädigung der Energiespeichereinrichtung führen kann. Im Weiteren kann dann wenigstens eine Schutzmaßnahme veranlasst werden. Mit dem nebengeordneten Patentanspruch erstreckt sich die Erfindung auch auf ein Kraftfahrzeug, insbesondere einen Personenkraftwagen oder ein leichtes Nutzfahrzeug, das eine erfindungsgemäße Energiespeicheranordnung aufweist. Zusätzliche Merkmale der Erfindung ergeben sich analog für beide Erfindungsgegenstände aus den abhängigen Patentansprüchen, der nachfolgenden Erfindungsbeschreibung (wobei dies ausdrücklich auch Merkmale einschließt, die als "beispielsweise", "bevorzugt", "insbesondere" etc. beschrieben sind) und der Zeichnung.

Die erfindungsgemäße Energiespeicheranordnung umfasst zumindest die folgenden Komponenten:
- ein geschlossenes Gehäuse, das insbesondere gegenüber der Umgebung hermetisch abgeschlossen ist;
- wenigstens eine im Gehäuse, d. h. im Innenraum des Gehäuses, angeordnete Energiespeichereinrichtung zur Speicherung von Brennstoff oder elektrischer Energie;
- (wenigstens) einen Drucksensor, der dafür vorgesehen ist, den Innendruck im Gehäuse, womit der Luftdruck im Inneren des Gehäuses gemeint ist, zu erfassen bzw. zu messen;
- eine Auswerteeinrichtung, die dafür vorgesehen bzw. die dazu ausgebildet ist, durch Auswerten bzw. Auswertung des mithilfe des Drucksensors erfassten Innendrucks eine kollisionsbedingte Krafteinwirkung auf das Gehäuse zu ermitteln bzw. ermitteln zu können.

Das Gehäuse bietet der wenigstens einen darin angeordneten Energiespeichereinrichtung mechanischen sowie gegebenenfalls auch thermischen Schutz. Bevorzugt ist vorgesehen, dass das Gehäuse zusammen mit der wenigstens einen Energiespeichereinrichtung eine Baueinheit bildet, die vormontiert und dann als Ganzes am Kraftfahrzeug befestigt werden kann, insbesondere im Bereich des Karosseriebodens.

Eine kollisionsbedingte Krafteinwirkung auf das Gehäuse kann zu einer Gehäusedeformation führen, wodurch sich zumindest kurzzeitig der Druck bzw. Innendruck im Gehäuse verändert, insbesondere ansteigt (Peak). Die Auswerteeinrichtung kann den mithilfe des Drucksensors erfassten, insbesondere fortlaufend erfassten, Innendruck im Gehäuse auswerten. Bei spontanen bzw. plötzlich auftretenden Druckänderungen bzw. -schwankungen kann die Auswerteeinrichtung (bspw. durch Vergleich mit vorausgehend erfassten Druckmesswerten und/oder durch Betrachtung einer Druckveränderungsgeschwindigkeit) auf eine kollisionsbedingte Krafteinwirkung auf das Gehäuse (die möglicherweise zu einer Deformation des Gehäuses oder sogar zu einer Beschädigung der wenigstens einen Energiespeichereinrichtung geführt hat) schließen. Dabei kann eine festgestellte Druckänderung, bspw. anhand der Amplitude und/oder des zeitlichen Verlaufs, charakterisiert und einer bestimmten Klasse, insbesondere einer bestimmten Kollisionsstärkeklasse oder Deformationsklasse, zugeordnet werden. Im Weiteren kann die Auswerteeinrichtung (oder ein Fahrzeugsteuergerät) dann wenigstens eine geeignete Schutzmaßnahme (s. u.) veranlassen bzw. einleiten. Dies kann sowohl im Betrieb des Kraftfahrzeugs als auch bei abgestelltem Kraftfahrzeug erfolgen. Das Gehäuse, der Drucksensor und die Auswerteeinrichtung bilden quasi ein vergleichsweise einfach aufgebautes und serientaugliches Überwachungssystem, das eine mögliche Beschädigung des Gehäuses und/oder der wenigstens eine Energiespeichereinrichtung ermitteln bzw. detektieren kann. Die Überwachung erfolgt durch eine Drucksensierung des Drucks bzw. Innendrucks im Gehäuse.

Bei einer Energiespeichereinrichtung handelt es sich bevorzugt um einen Drucktank zur Speicherung von Brennstoff, vorzugsweise zur Speicherung von Wasserstoff (H₂) für einen Wasserstoffantrieb oder zur Speicherung von Erdgas (CNG) für einen Erdgasantrieb, wobei Betriebsdrücke von bis zu 700 bar und mehr vorgesehen sind. Bei einer Energiespeichereinrichtung kann es sich auch um ein Batteriemodul oder dergleichen zur Speicherung von elektrischer Energie für einen elektrischen Fahrantrieb handeln. Bevorzugt sind mehrere Energiespeichereinrichtungen, insbesondere mehrere Drucktanks oder mehrere Batteriemodule, im Gehäuse angeordnet, die gemeinsam überwacht werden können. Dadurch wird der Überwachungsaufwand gering gehalten. Ferner können Gewicht und Kosten eingespart werden.

Der Drucksensor der erfindungsgemäßen Energiespeicheranordnung ist dazu ausgebildet, den Druck (Innendruck) im Inneren des Gehäuses zu erfassen beziehungsweise zu messen und entsprechende Druckmesswerte, insbesondere in Form elektrischer Signale, zu generieren. Der Drucksensor kann (direkt) am Gehäuse oder im Gehäuse angeordnet sein. Bevorzugt ist der Drucksensor entfernt bzw. abseits vom Gehäuse angeordnet und über eine Druckleitung mit dem Gehäuse bzw. dessen Innenraum verbunden (d. h. die Übertragung des Innendrucks auf den Drucksensor erfolgt mittels einer Druckleitung). Dadurch können Fehlerquellen, die sich bei einer direkten Anordnung am oder im Gehäuse ergeben, vermieden werden. Ferner kann der Drucksensor an einer besonders geschützten Stelle des Kraftfahrzeugs angeordnet werden. Die Druckleitung ist bevorzugt als Rohr oder Schlauch ausgebildet.

Die Auswerteeinrichtung der erfindungsgemäßen Energiespeicheranordnung ist bevorzugt dazu ausgebildet, selbsttätig die, insbesondere fortwährend erfassten, Messwerte des Drucksensors auszuwerten bzw. zu analysieren und insbesondere auch wenigstens eine Schutzmaßnahme zu veranlassen, falls bei der Auswertung unzulässige Druckänderungen bzw. -schwankungen des Innendrucks, die insbesondere einen bestimmten Schwell- oder Toleranzwert übersteigen, ermittelt werden. Die erfassten bzw. gemessenen Druckwerte können auch für spätere Auswertungen in der Auswerteeinrichtung gespeichert werden. Bevorzugt handelt es sich bei der Auswerteeinrichtung um eine mikroelektronische Einrichtung, die auch im Fahrzeugsteuergerät integriert sein kann. Die Auswertung kann mithilfe eines, insbesondere softwarebasierten, Algorithmus erfolgen.

Mögliche Schutzmaßnamen sind beispielsweise das Ausgeben einer Warnmeldung an den Fahrer (zum Beispiel "Dringend Werkstatt aufsuchen!"), das Ausschalten des Fahrzeugantriebs, das Verhindern eines Betankungsvorgangs beziehungsweise eines Ladevorgangs und dergleichen.

Im Gehäuse ist erfindungsgemäß zwischen der Energiespeichereinrichtung und einem (unteren) Gehäuseboden ein Deformationsfreiraum vorgesehen. D. h., die Energiespeichereinrichtung ist oberhalb eines sich über dem Gehäuseboden anschließenden Deformationsfreiraum angeordnet, um bei einer geringen Deformation des Gehäusebodens (bspw. infolge einer Kollision mit einem Bodenhindernis) eine Beschädigung der Energiespeichereinrichtung zu verhindern. Der Deformationsfreiraum kann (in z-Richtung) eine Höhe im Bereich von 5 mm bis 15 mm aufweisen. Die Auswerteeinrichtung ist dazu vorgesehen bzw. ausgebildet, durch Auswerten bzw. Auswertung des mithilfe des Drucksensors erfassten Innendrucks ein kollisionsbedingtes Anschlagen des Gehäusebodens an die Energiespeichereinrichtung zu ermitteln bzw. ermitteln zu können. Dies kann insbesondere anhand einer Analyse des (zeitlichen) Druckverlaufs ermittelt werden. Dadurch kann insbesondere ein sogenanntes "hartes" Anschlagen des Gehäusebodens (insbesondere infolge einer kollisionsbedingten Krafteinwirkung von unten; siehe Zeichnung) an die Energiespeichereinrichtung(en), wobei es zu Beschädigungen der Energiespeichereinrichtung(en) kommen kann, ermittelt bzw. detektiert und gegebenenfalls wenigstens eine geeignete Schutzmaßname veranlasst werden.

Das Gehäuse kann wenigstens ein Druckausgleichsventil aufweisen, welches, bspw. bei Erwärmung, einen langsamen Druckausgleich zwischen dem Innenraum des Gehäuses bzw. dem Gehäuseinneren und der Umgebung gewährleistet.

Die Erfindung wird nachfolgend anhand der Zeichnung näher erläutert. Die in den Figuren gezeigten und/oder nachfolgend erläuterten Merkmale können, auch unabhängig von bestimmten Merkmalskombinationen, allgemeine Merkmale der Erfindung sein und die Erfindung entsprechend weiterbilden.
- Fig. 1: zeigt schematisch eine erfindungsgemäße Energiespeicheranordnung für ein Kraftfahrzeug.
- Fig. 2: veranschaulicht schematisch mögliche Druckverläufe im Gehäuse der Energiespeicheranordnung aus Fig. 1 bei einer kollisionsbedingten Krafteinwirkung.

Die Energiespeicheranordnung 100 weist ein geschlossenes kastenartiges Gehäuse 110 auf, in dessen mit Luft gefülltem Innenraum bzw. Gehäuseinneren 112 mehrere als Rohrspeicher ausgebildete Drucktanks 120 angeordnet sind. (Anstelle von Drucktanks können auch Batteriemodule oder Ähnliches vorgesehen sein, wie oben beschrieben.) Zwischen den Drucktanks 120 und dem Gehäuseboden 111 befindet sich ein zum Innenraum 112 gehörender Deformationsfreiraum 113. Das Gehäuse 110 ist gegenüber der Umgebung abgedichtet bzw. hermetisch abgeschlossen. In der Gehäusewandung ist an einer geeigneten Stelle ein Druckausgleichsventil 114 angeordnet, welches einen langsamen Druckausgleich mit der Umgebung gewährleistet. Das Gehäuse 110 mit den Drucktanks 120 ist bspw. am oder im Karosserieboden eines Kraftfahrzeugs angeordnet.

Zur Energiespeicheranordnung 100 gehört ferner ein Drucksensor 130, der dafür vorgesehen ist, den Innendruck p im Gehäuse 110, d. h. den Luftdruck im Innenraum 112, zu erfassen. Der Drucksensor 130 ist entfernt vom Gehäuse 110 angeordnet und über eine Druckleitung 140 mit dem Gehäuse 110 bzw. dessen Innenraum 112 verbunden. Zur Energiespeicheranordnung 100 gehört auch eine mit dem Drucksensor 130 verbundene Auswerteinrichtung 150. Die Verbindung des Drucksensors 130 mit der Auswerteeinrichtung 150 kann über ein fahrzeugseitiges Bussystem, beispielsweise einen CAN-Bus, erfolgen.

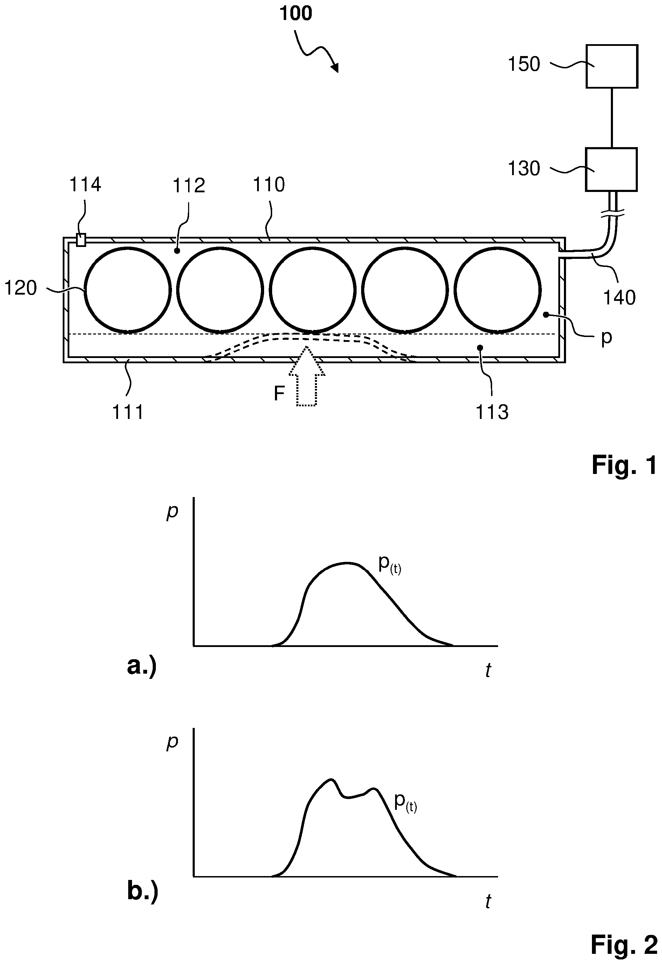

Die Auswerteeinrichtung 150 ist dafür vorgesehen, durch Auswerten bzw. Analysieren des mithilfe des Drucksensors 130 erfassten Innendrucks p eine kollisionsbedingte Krafteinwirkung F auf das Gehäuse 110 zu ermitteln und ein kollisionsbedingtes Anschlagen des Gehäusebodens 111 an die Drucktanks 120 zu ermitteln (wie strichliniert angedeutet), d. h. festzustellen, wann der Deformationsfreiraum 113 quasi aufgebraucht ist. Die Krafteinwirkung F kann wie gezeigt von unten erfolgen (relevantester Fall) oder auch aus einer anderen Richtung. Im Weiteren kann dann wenigstens eine geeignete Schutzmaßnahme veranlasst werden, wie oben beschrieben. Fig. 2a zeigt einen möglichen Druckverlauf p₍ₜ₎ infolge einer kollisionsbedingten Krafteinwirkung F auf das Gehäuse 110 ohne Anschlagen des Gehäusebodens 111 an einen der Drucktanks 120. Gut zu erkennen ist hier die Ausbildung einer kurzzeitigen Druckspitze (Peak). Fig. 2b veranschaulicht einen Druckverlauf p₍ₜ₎ mit einem "harten" Anschlag des Gehäusebodens 111 an wenigstens einen der Drucktanks 120. Durch Auswerten bzw. Analysieren des Druckverlaufs p₍ₜ₎ kann somit auf die Heftigkeit der Krafteinwirkung und auf mögliche Beschädigungen der Drucktanks 120 geschlossen werden.

## Patentansprüche

1. Energiespeicheranordnung (100) für ein Kraftfahrzeug, umfassend:
- ein geschlossenes Gehäuse (110);
- wenigstens eine im Gehäuse (110) angeordnete Energiespeichereinrichtung (120) zur Speicherung von Brennstoff oder elektrischer Energie;
- einen Drucksensor (130), der dafür vorgesehen ist, den Innendruck (p) im Gehäuse (110) zu erfassen;
- eine Auswerteeinrichtung (150), die dafür vorgesehen ist, durch Auswerten des mithilfe des Drucksensors (130) erfassten Innendrucks (p) eine kollisionsbedingte Krafteinwirkung (F) auf das Gehäuse (110) zu ermitteln,
**dadurch gekennzeichnet, dass**
im Gehäuse (110) zwischen der Energiespeichereinrichtung (120) und einem Gehäuseboden (111) ein Deformationsfreiraum (113) vorgesehen ist, wobei die Auswerteeinrichtung (150) dazu ausgebildet ist, durch Auswerten des mithilfe des Drucksensors (130) erfassten Innendrucks (p) ein kollisionsbedingtes Anschlagen des Gehäusebodens (111) an die Energiespeichereinrichtung (120) zu ermitteln.

2. Energiespeicheranordnung (100) nach Anspruch 1,
**dadurch gekennzeichnet, dass**
der Drucksensor (130) entfernt vom Gehäuse (110) angeordnet und über eine Druckleitung (140) mit dem Gehäuse (110) verbunden ist.

3. Energiespeicheranordnung (100) nach Anspruch 1 oder 2,
**dadurch gekennzeichnet, dass**
der Deformationsfreiraum (113) eine Höhe im Bereich von 5 mm bis 15 mm aufweist.

4. Energiespeicheranordnung (100) nach einem der vorhergehenden Ansprüche,
**dadurch gekennzeichnet, dass**
das Gehäuse (110) ein Druckausgleichsventil (114) aufweist.

5. Energiespeicheranordnung (100) nach einem der vorhergehenden Ansprüche 1 bis 4,
**dadurch gekennzeichnet, dass**
die Energiespeichereinrichtung (120) ein Drucktank ist.

6. Energiespeicheranordnung (100) nach einem der vorhergehenden Ansprüche 1 bis 4,
**dadurch gekennzeichnet, dass**
die Energiespeichereinrichtung ein Batteriemodul ist.

7. Kraftfahrzeug, mit einer Energiespeicheranordnung (100) gemäß einem der vorhergehenden Ansprüche.

8. Kraftfahrzeug nach Anspruch 7,
**dadurch gekennzeichnet, dass**
das Gehäuse (110) der Energiespeicheranordnung (100) im Bereich eines Karosseriebodens des Kraftfahrzeugs angeordnet ist.

## Claims

1. Energy storage arrangement (100) for a motor vehicle, comprising:
- a closed housing (110);
- at least one energy storage device (120) arranged in the housing (110) for storing fuel or electric energy;
- a pressure sensor (130), which is provided for detecting the internal pressure (p) in the housing (110);
- an evaluation device (150), which is provided for determining a collision-induced force (F) on the housing (110), by evaluating the internal pressure (p) detected with the aid of the pressure sensor (130),
**characterized in that**
a free deformation space (113) is provided in the housing (110) between the energy storage device (120) and a housing base (111), wherein the evaluation device (150) is designed to determine a collision-induced impact of the housing base (111) on the energy storage device (120), by evaluating the internal pressure (p) detected with the aid of the pressure sensor (130).

2. Energy storage arrangement (100) according to claim 1,
**characterized in that**
the pressure sensor (130) is arranged remote from the housing (110) and is connected with the housing (110) via a pressure line (140).

3. Energy storage arrangement (100) according to claim 1 or 2,
**characterized in that**
the free deformation space (113) has a height in the range of 5 mm to 15 mm.

4. Energy storage arrangement (100) according to any one of the previous claims, **characterized in that**
the housing (110) has a pressure compensation valve (114).

5. Energy storage arrangement (100) according to any one of the previous claims 1 to 4,
**characterized in that**
the energy storage device (120) is a pressure tank.

6. Energy storage arrangement (100) according to any one of the previous claims 1 to 4,
**characterized in that**
the energy storage device is a battery module.

7. Motor vehicle, with an energy storage arrangement (100) according to any one of the previous claims.

8. Motor vehicle according to claim 7,
**characterized in that**
the housing (110) of the energy storage arrangement (100) is arranged in the region of a body floor of the motor vehicle.

## Revendications

1. Agencement de stockage d'énergie (100) pour un véhicule automobile, comprenant :
- un boîtier (110) fermé ;
- au moins un dispositif de stockage d'énergie (120) agencé dans le boîtier (110) pour le stockage de combustible ou d'énergie électrique ;
- un capteur de pression (130) qui est prévu afin de détecter la pression interne (p) dans le boîtier (110) ;
- un dispositif d'évaluation (150) qui est prévu afin de déterminer une action de force (F) due à la collision sur le boîtier (110) en évaluant la pression interne (p) détectée à l'aide du capteur de pression (130),
**caractérisé en ce que**
un espace libre de déformation (113) est prévu dans le boîtier (110) entre le dispositif de stockage d'énergie (120) et un fond de boîtier (111), dans lequel le dispositif d'évaluation (150) est réalisé afin de déterminer un impact du à la collision du fond de boîtier (111) contre le dispositif de stockage d'énergie (120) en évaluant la pression interne (p) détectée à l'aide du capteur de pression (130).

2. Agencement de stockage d'énergie (100) selon la revendication 1,
**caractérisé en ce que**
le capteur de pression (130) est agencé à distance du boîtier (110) et est relié au boîtier (110) par le biais d'une conduite de pression (140).

3. Agencement de stockage d'énergie (100) selon la revendication 1 ou 2,
**caractérisé en ce que**
l'espace libre de déformation (113) présente une hauteur dans la plage de 5 mm à 15 mm.

4. Agencement de stockage d'énergie (100) selon l'une quelconque des revendications précédentes,
**caractérisé en ce que**
le boîtier (110) présente une soupape de compensation de pression (114).

5. Agencement de stockage d'énergie (100) selon l'une quelconque des revendications précédentes 1 à 4,
**caractérisé en ce que**
l'agencement de stockage d'énergie (120) est un réservoir sous pression.

6. Agencement de stockage d'énergie (100) selon l'une quelconque des revendications précédentes 1 à 4,
**caractérisé en ce que**
le dispositif de stockage d'énergie est un module de batterie.

7. Véhicule automobile avec un agencement de stockage d'énergie (100) selon l'une quelconque des revendications précédentes.

8. Véhicule automobile selon la revendication 7,
**caractérisé en ce que**
le boîtier (110) de l'agencement de stockage d'énergie (100) est agencé dans la zone d'un plancher de carrosserie du véhicule automobile.
